# EUROPEAN PATENT APPLICATION

(11) **EP 0 530 165 A2**
(43) Date of publication of application: **03.03.1993**
(21) Application number: 92850196.4
(22) Date of filing: 18.08.1992
(51) Int. Cl.: H04Q 7/04, H04B 7/26

(54) **Mobile station-controlled handoff**

(30) Priority: 23.08.1991 US 749103
(71) Applicant: TELEFONAKTIEBOLAGET L M ERICSSON, S-126 25 Stockholm (SE)
(72) Inventor: Akerberg, Dag, S-196 30 Kungsängen (SE)
(74) Representative: Lövgren, Tage

(57) **Abstract**

A cellular mobile radio system wherein a mobile station (M1-M9) chooses an appropriate base station (B1-B10) and an appropriate carrier/time slot combination (Fig. 3) of a multicarrier time division multiplexed radio system for the purpose of call setup and handoff. The mobile station, while in communication with one base station, scans for least interfered channels as well as base stations stronger than the base station the mobile station is presently in communication with. The mobile station uses the information to determine when to initiate a call setup or handoff to prevent the quality of the mobile station's communication link from decreasing.

## Description

### FIELD OF THE INVENTION

The invention relates to mobile radio communication systems comprising portable base and mobile stations and time division multiplexed radio channels utilizing dynamic channel allocation. In particular, the invention relates to a method for choosing, at a mobile station, an appropriate base station and appropriate carrier/time slot combination of a multicarrier time division multiplexed radio system for the purpose of call setup or handoff.

### BACKGROUND OF THE INVENTION

Mobile radio communication systems may be used for various kinds of communication. Many different mobile radio communication systems have been suggested or are in operation depending upon the intended major use and the required services of the system. When a mobile radio communication system contains a large number of base and mobile stations, effective use of the radio frequency spectrum and traffic handling capacity become very important. In addition, the type of communication and services provided and the ability to establish and uphold an established connection are also important.

In cellular mobile radio systems, it is fundamental that a mobile station with an established connection on a radio channel shall be able to maintain the established connection when moving from one cell serviced by a base station to another cell serviced by another base station. It is also highly desirable that the mobile station with an established connection on a radio channel shall be able to maintain the established connection when moving within the same cell and when the radio channel which is used is subject to gradually increased or sudden interference. The process by which a mobile station can maintain an established connection when moving in a cellular mobile radio system is generally called a handoff.

Some cellular mobile radio systems use cell patterns and radio channel reuse rules which fix the allocation of radio channels to individual cells and the base stations fixed within those cells. To improve flexibility of some mobile radio systems, it has been suggested not to allocate all available radio channels to individual cells and base stations according to a fixed cell pattern and reuse rules but rather to allocate some of the available channels differently from time to time. Depending upon the traffic load as well as other circumstances, some of the channels in the radio system can be individually allocated to individual cells and base stations for a limited time. It has also been suggested not to allocate any available radio channels permanently to individual cells to base stations but to allocate all available radio channels according to prevailing traffic conditions. This is called Dynamic Channel Selection, DCS.

In a mobile radio communication system using multicarrier time division multiplex radio channels and DCS, the radio carrier as well as the time slot should be determined for each call at setup and handoff. In some systems, the decision of determining a radio carrier and time slot combination is centralized and done in the fixed part of the system, e.g., in the base station or a mobile switching center. In other systems, the decisions are decentralized and each mobile station decides which base station, radio carrier and time slot is to be used for particular caii. This is called portable-controlled set-up and handoff.

In a cellular mobile radio system which contains many base stations and mobile stations and uses DCS with portable-controlled set-up and handoff, it is important to have procedures which enable the mobile station, which scans the available channels and keeps track of itself, to choose base stations and to select radio channels for calls in a convenient way. This is important irrespective of whether the cellular mobile radio system is intended to be used for only speech communication only or if the cellular mobile radio system is intended to be used for transmission of data. However, due to different fields of use, different types of interferences and different reasons for making handoff, a roaming or handoff procedure which is convenient in one case may not be particularly convenient in another case. The invention contains handoff procedures optimized for different cases.

A further aspect to consider is that some mobile stations have limited power supplies, in particular small, light-weight battery powered mobile stations. Normally, a mobile station consumes more power when transmitting radio signals and substantially less power when receiving radio signals. A mobile station may be designed to consume very little power when the mobile station is switched on. In order not to consume more energy than necessary, it has been suggested that mobile stations can be put in an idle state when not involved in an ongoing call or when not setting up a new call. When a mobile station is in the idle state, the mobile station may be unable to transmit and receive radio signals during a major part of a repeated time interval and be able to receive but not transmit radio signals only during a minor part of the repeated time interval. As a result, the average power consumption may be reduced when the minor time interval is reduced in relation to the major time interval. If the mobile station is able to perform the roaming procedure in the idle state, the minortime interval can not be made smaller than the time interval required to receive radio signals required for roaming. If the small lightweight battery powered mobile stations are to be frequently used in a mobile radio communication system, it is important that the procedures for roaming and for setting up calls take into account the restriction caused by the necessary power consumption of such stations and allow idle states.

### SUMMARY OF THE INVENTION

One object of the present invention is to provide a mobile radio cellular system using dynamic channel selection in which the mobile station controls the handoff procedure. In a time division multiple access system, it is possible for a mobile station to listen to other channels while communicating on one channel. If all base stations are required to have at least one channel active and if that channel transmits the base station identity, then it is possible for mobile stations while in communication with one base station to not only scan for least interfered channels, but also scan for base stations stronger than the one they are presently using. Since the mobile station can scan for other base stations, the mobile station can select a stronger base station, if any, to handoff to. As a result, in time division multiple access systems, it is possible to make seamless handoffs, i.e., a handoff in which the speech is not interrupted. This is possible since the communication is kept on the old channel while a new link is built up on a new channel.

It is another object of the present invention to provide a mobile cellular radio system in which the mobile station is maintained in an idle locked state of low power consumption when the mobile station is not involved with a call.

### BRIEF DESCRIPTION OF THE DRAWINGS

Figure 1 illustrates a portion of a cellular mobile radio system having cells, a mobile switching center, base stations and mobile stations.
Figure 2 illustrates components of a mobile station in accordance with the present invention.
Figure 3 illustrates a TDMAframe and traffic slot.
Figure 4 illustrates a flow chart of a subroutine utilized by the computer of a mobile station in accordance with the present invention.
Figure 5 illustrates a flow chart of a subroutine utilized by the computer of a mobile station in accordance with the present invention.
Figure 6 illustrates a flow chart of a subroutine utilized by the computer of a mobile station in accordance with the present invention.
Figure 7 illustrates a flow chart of a subroutine utilized by the computer of a mobile station in accordance with the present invention.

### DETAILED DESCRIPTION

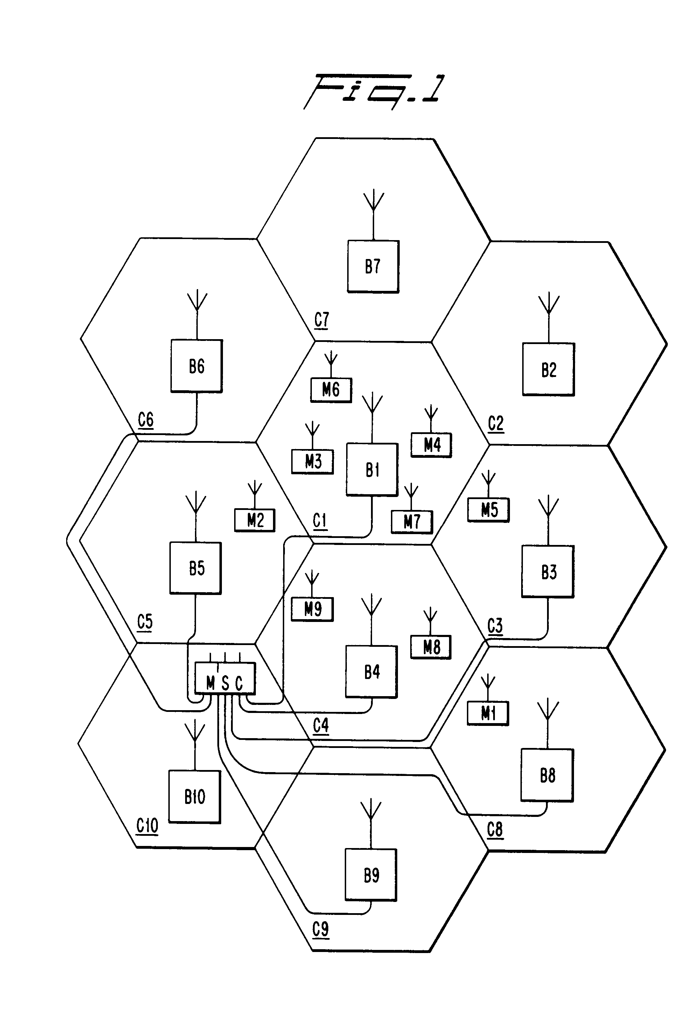

Figure 1 illustrates 10 cells, C1-C10 in a cellular mobile radio system. Normally a cellular mobile radio system according to the present invention would be implemented with more than 10 cells. However, for the purposes of simplicity, the present invention can be explained using the simplified representation illustrated in Figure 1.

For each cell, C1-C10, there is a base station, B1-B10, with the same reference numeral as the corresponding cell. Figure 1 illustrates the base stations as situated in the vicinity of the cell center and having omnidirectional antennas. The cells C1-C10 are, therefore, schematically represented as hexagons. The base stations of adjacent cells may, however, be co-located in the vicinity of cell borders and have directional antennas as is well known to those skilled in the art.

Figure 1 also illustrates nine mobile stations M1-M9, movable within a cell and from one cell to another. In typical cellular radio system there would normally be more than nine mobile stations. In fact, there are typically many times the number of mobile stations as there are base stations. However, forthe purpose of explaining the invention, the reduced number of mobile stations is sufficient.

Also illustrated in Figure 1, is a mobile switching center MSC. The mobile switching center MSC illustrated in Figure 1 is connected to all 10 base stations B1-B10 by cables. The mobile switching center MSC is also connected by cables to a fixed public switching telephone network or similar fixed network. All cables from a mobile switching center MSC to the base stations B1-B10 and the cables to the fixed network are not illustrated. The mobile switching center can also be part of the public network or can also be a PABX type switch.

In addition to the mobile switching center MSC illustrated, there may be another mobile switching center connected by cables to base stations other than those illustrated in Figure 1. Instead of cables, other means, for example, fixed radio links may be used for connecting base stations B1-B10 to the mobile switching center MSC. The mobile switching center MSC, the base stations B1-B10 and the mobile stations M1-M9 are all computer controlled.

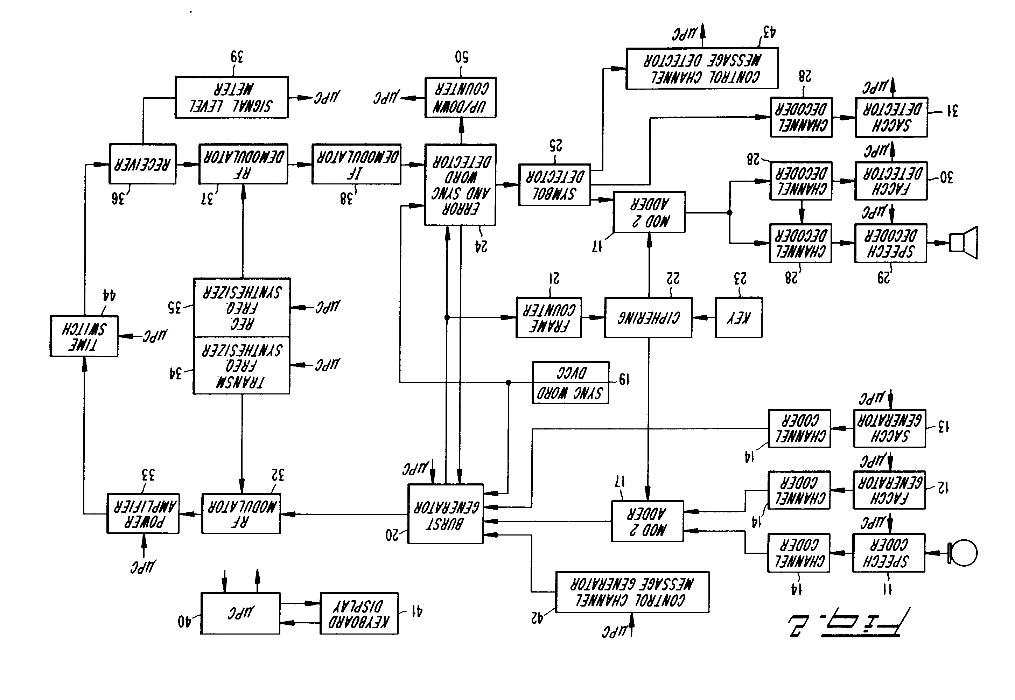

Referring now to Fig. 2, an embodiment of a mobile station that can be utilized in a cellular telephone system that operates in accordance with the present invention is illustrated. This particular example pertains to a mobile station that can be used in a digital communications system, i.e., one in which digitized voice information is transmitted between base and mobile stations. Furthermore, the operation of the system is explained in the context of full-rate transmissions. It will be readily appreciated, however, that the invention is equally applicable to other types of cellular radio systems, such as those in which information is transmitted in an analog format or transmitted digitally at a half rate.

In the mobile station depicted in Fig. 2, a speech coder 11 converts the analog signal generated by microphone into a binary data stream. The data stream is then divided into data packets, according to the TDMA principle. A fast associated control channel (FACCH) generator 12 generates control signalling messages that are transmitted from the mobile station to the land-based system. The FACCH message replaces a user frame (speech/data) whenever it is to be transmitted, e.g., at call set-up. A slow associated control channel (SACCH) or (S/ID) generator 13 provides signalling messages that are transmitted over a continuous channel for the exchange of information between the base station and the mobile station and vice-versa. Channel coders 14 may be respectively connected to the speech coder 11, FACCH generator 12, and SACCH generator 13 for manipulating the incoming data in order to carry out error detection and correction. The techniques used by the channel coders 14 are preferably convolutional encoding, which protects important data bits in the speech code, and cyclic redundancy check (CRC), wherein the perceptually significant bits in the speech coder frame are used for computing a the check bits.

The mobile station further includes a Sync Word generator 19 for providing the appropriate synchronization word (Sync Word). The Sync Word is a 28-bit word used for time slot synchronization and identification.

A burst generator 20 generates message bursts for transmission by the mobile station. The burst generator 20 is connected to the outputs of the modulo-two-adder 17, the channel coder 14, the Sync Word generator 19, sync word detection and error detector 24, and a control channel message generator 42, to integrate the various pieces of information from these respective units into a single message burst. Under the control of the microprocessor 40, two different types of message bursts are generated by the burst generator 20: control channel message bursts from the control channel message generator 42 and voice/traffic message bursts. The control channel message replaces the speech data normally generated in a voice/traffic burst.

The transmission of a burst, which is equivalent to one time slot, is synchronized with the transmission of other time slots, which together make up a frame of information. The transmission of each burst is adjusted according to timing control provided by sync word detector 24. Briefly, the base station functions as the master and the mobile station is the slave with respect to frame timing. The sync word detector 24 detects the timing of an incoming bit stream from the base station and synchronizes the burst generator 20. The sync word and error detector 24 is operable for checking the Sync Word and checking the CRCs to detect errors.

An up/down counter 50 is coupled to the error detection equalizer 24 and the microprocessor controller 40. Aframe counter 21 is coupled to the burst generator 20 and the error detection equalizer 24. The frame counter 21 updates a ciphering code utilized by the mobile station for each transmitted frame, e.g., once every 20 ms. An optional ciphering unit22 is provided for generating the ciphering code utilized by the mobile station. A pseudo random algorithm is preferably utilized. The ciphering unit 22 is controlled by a key 23 which is unique for each subscriber. The ciphering unit 22 consists of a sequencer which updates the ciphering code.

The burst produced burst generator 20, which is to be transmitted, is forwarded to an RF modulator 32. The RF modulator 32 is operable for modulating a carrier frequency. The transmitter carrier frequency supplied to the RF modulator 32 is generated by a transmitting frequency synthesizer 34 in accordance with the selected transmitting channel. Before the modulated carrier is transmitted by an antenna, the carrier is amplified by a power amplifier 33. The RF power emission level of the amplifier is selected on command by a microprocessor controller 40. The amplified signal is passed through a time switch 44 before it reaches the antenna. The timing is synchronized to the transmitting sequence by the microprocessor controller 40.

A receiver carrier frequency signal is generated in accordance with the selected receiving channel by a receiving frequency synthesizer 35. Incoming radio frequency signals are received by a receiver 36, after passing through the time switch 44. The timing is synchronized to the receiving sequence by the microprocessor controller 40. The strength of the received signals are measured by a signal level meter 39. The received signal strength value is then sent to the microprocessor controller 40. An RF demodulator 37, which receives the receiver carrier frequency signal from the receiving frequency synthesizer 35 and the radio frequency signal from the receiver 36, demodulates the radio frequency carrier signal, thus generating an intermediate frequency. The intermediate frequency signal is then demodulated by an IF demodulator 38 which restores the original modulated digital information.

The restored digital information provided by the IF demodulator 38 is supplied to the error detector 24. A symbol detector 25 converts the received two-bit symbol signal-bit data stream. The symbol detector 25 in turn produces three distinct output signals. Control channel messages are sent to a control message detector 43 which supplies detected control channel information to the microprocessor controller 40. Any speech data/FACCH data is supplied to a modulo-two adder 17.

The modulo-two adder 17 provides the speech data/FACCH data to two channel decoders 28. The convolutionally encoded data is decoded using the reverse of the above-mentioned coding principle. The received cyclic redundancy check (CRC) bits are checked to determine if any error has occurred. A speech decoder 29 processes the received speech data from the channel decoder 28 in accordance with a speech coder algorithm, and generates the received speech signal. The analog signal is finally enhanced by a filtering technique. Messages on the fast associated control channel are detected by a FACCH detector 30, and the information is transferred to the microprocessor controller 40.

Messages on the slow associated control channel are detected by a SACCH detector 31, and that information is transferred to the microprocessor controller 40.

The microprocessor controller 40 controls the mobile station activity and the base station communication, and also handles the terminal keyboard input and display output 41. Decisions by the microprocessor controller 40 are made in accordance with received messages and measurements that are made. The keyboard and display unit 41 enable information to be exchanged between the user and the base station.

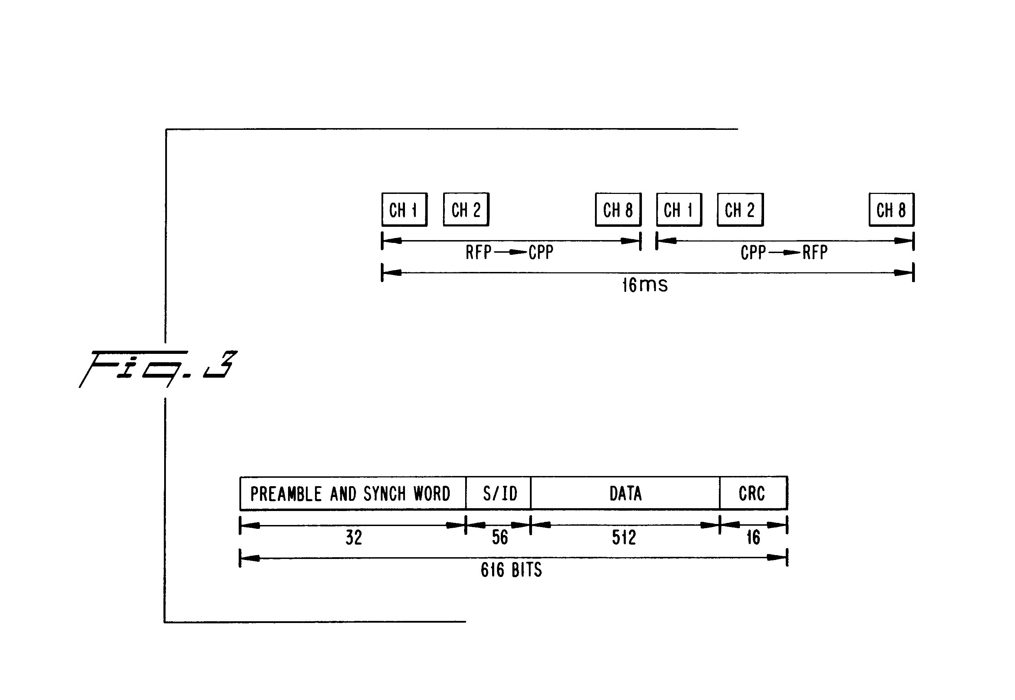

In the embodiment of the present invention, each base station is always active on at least one channel. The channel time slot and carrier allocation is dynamic and decentralized to each pico cell and each mobile station. Each mobile station, which contains the components described in Figure 2, is in a communication state on a duplex radio channel. A duplex radio channel is a combination of a duplex time slot and a specific carrier. Typically, there are 16-24 time slots, giving 8-12 duplex slots per carrier. See Figure 3. Each mobile station scans channels on other time slots and measure the field strength and checks the base station identity while in communication on one time slot. Since the mobile station and the base stations are continuously informed of the status on all channels, the dynamic channel selection, DCS, can be made very efficient and fast. The mobile station identifies the strongest base station, which is the base station with the strongest signal strength, by reading a base station identification code in the S/ID section of each slot of every active channel as illustrated in Figure 3. The mobile station has a memory for storing the identity of the strongest base station and a list of least interfered channels, wherein the list of channels is made up of channels with the least amount of interference. When a new speech channel for handover is requested, the mobile station communicates a setup message to the base station on the channel with the least amount of interference.

In the present invention, a handoff may be required for several reasons. First, the movement of the mobile station may make it necessary for the mobile station to request a handoff. A handoff may also be required due to the movement of another mobile station which is using the same channel in an adjacent cell. In addition, a sudden slot theft caused by another mobile station may also cause a mobile station to request a handoff. A sudden slot theft may occur when another mobile station of the same or in an adjacent system selects the same channel for a call set up for a handoff. Finally, a request for a handoff may be required because of a slow slot drift between adjacent systems, which causes errors to occur in the time slot.

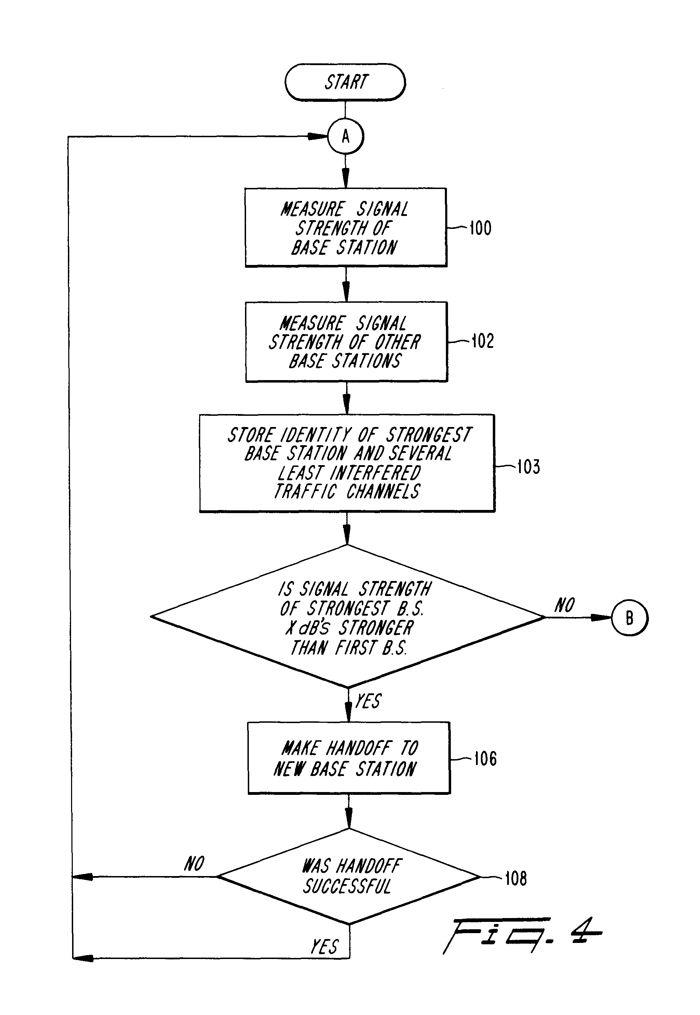

In traditional mobile radio systems, a handoff procedure begins when the quality of the channel declines. According to the present invention, a handoff procedure can begin before the quality of the channel declines which results in a seamless handoff which is unnoticeable for the user. In Figure 4, a computer in the mobile station regularly monitors in a conventional manner the signal strength of the base station it is communicating with as is illustrated in step 100. In addition, the mobile computer regularly scans other channels in the system and can therefore determine the signal strength of other base stations in the system. In step 102, the computer stores the identity of the strongest station and an ordered list of least interfered channels. The ordered list of least interfered channels may be grouped using a resolution of 6-10 dB in the signal strength measurement. Normally, it is sufficient to store information on only the six least interfered channels. The signal strength of the present base station is compared with the signal strength of the stored base station to determine if the stored base station has a stronger signal than the present base station in step 104. If the stored base station has a signal strength greater than the signal strength of the present base station, the computer selects a new channel from the ordered list of least interfered channels and makes a setup to the stored base station to handle the call in step 106. At channel set up which includes handoff, the mobile station first tries the channel from the ordered list of least interfered channels which has the lowest field strength. In one embodiment of the present invention, in order to prevent needless handoffs, the stored base station can be required to have a signal strength of at least 6 to 10 db's stronger than the first base station before the computer will hand off the call. However, the present invention is not limited thereto.

The interval between scans is typically about once every 10 seconds so as to not cause a high current drain in the mobile station. However, a dramatic change in the signal strength of the present base station may occur almost instantaneously. In order to handle this situation without reducing the interval between scans, the mobile station regularly measures the field strength of its own signal on the channel between the mobile station and the base station.

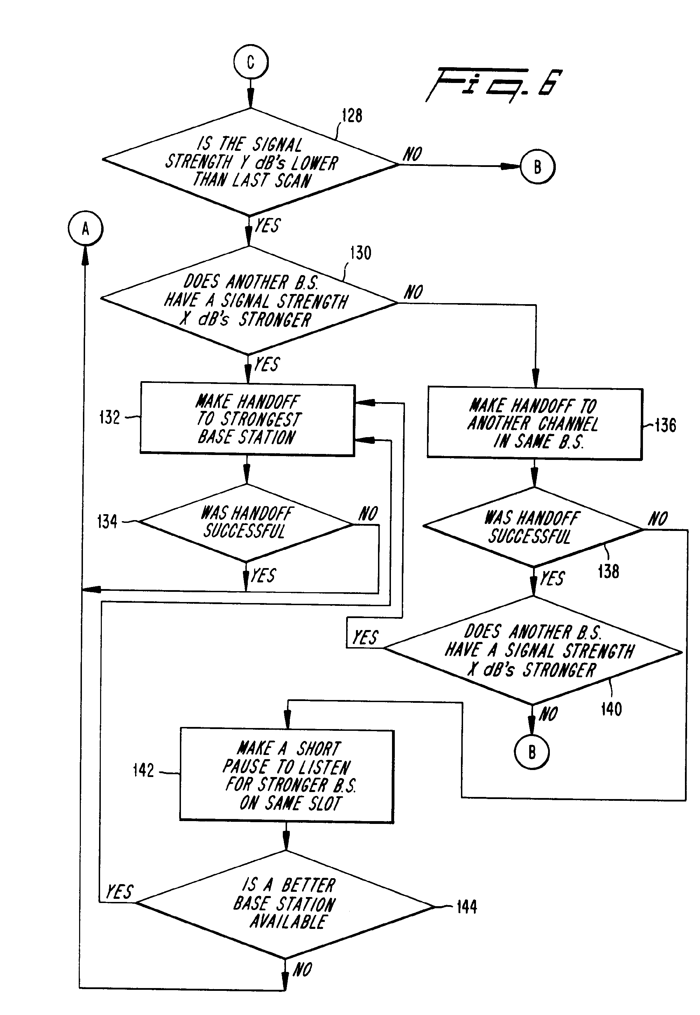

In Figure 6, the computer determines whether the field strength of the present base station has fallen by a predetermined amount from a reference value which is typical or the average of the last scans, since the last scan was made in step 128. The predetermined amount can be equal to 10 decibels, but is not limited thereto. If it is determined that the field strength of the present base station has fallen by at least the predetermined amount, the computer makes a qu ick scan to check if a stronger base station exists. In addition, the antenna diversity at either the base station or the mobile station can be changed in an attempt to increase the signal strength of the signal between the mobile station and the base station. If a base station which has a signal strength greater than the signal strength of the present base station by 6-10 decibels is found in step 130, the computer hands off the call to the new base station in step 132. However, if a stronger base station is not found, the computer hands off the call to another channel in the present base station in step 136. If the handoff is successful, the computer again looks for a base station with a stronger signal strength in step 140. If a stronger base station is found, the call is handed off to the new base station. However, if the hand off in step 138 is not successful, the computer in the mobile station can cause a short break in its own down link communication to check for a stronger base station during the present time slot in step 142. If a stronger base station is available, the computer hands off the call to the new base station. However, if in spite of listening during its own time slot a better base station is not found, the mobile station does not hand off the call.

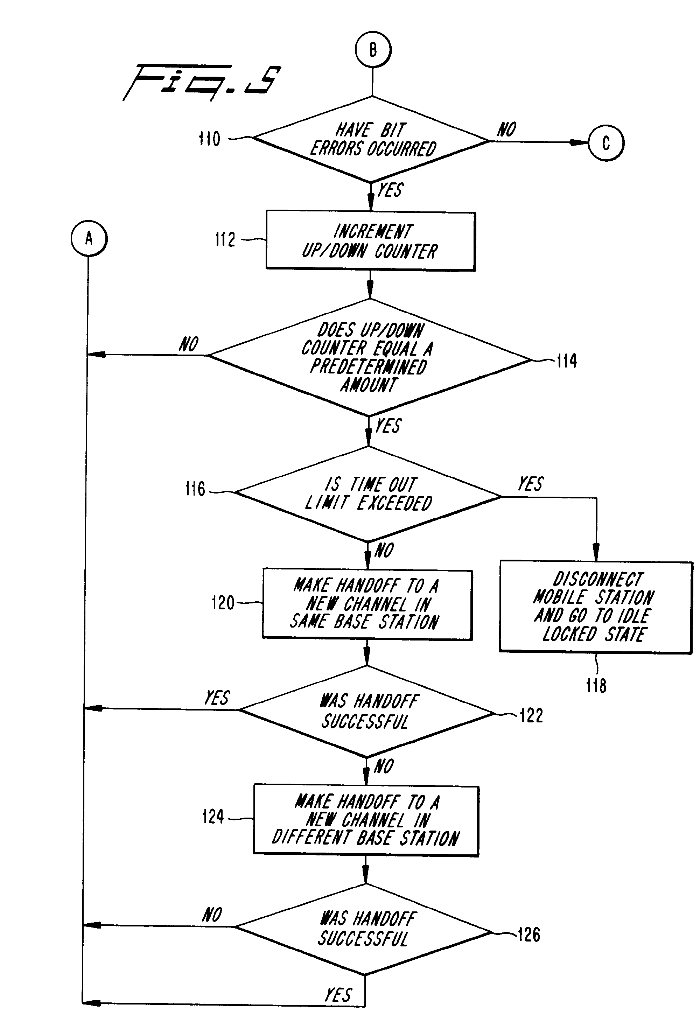

In the present invention, the computer in the mobile station checks to determine if bit errors are occurring in the slot and thereby decreasing the quality of the channel as illustrated in Figure 5. The transmissions in each time slot in each direction to and from the mobile station has a CRC, Cyclic Redundancy Check, with which the reception is used to determine if transmission errors have occurred. Transmission errors in a time slot received at the base station are reported back to and stored in the mobile station in the next slot. The errors may occur slowly as in the case of slow slot drift. Typically, 10 to 20 frames are received during the time it takes for one bit to drift out of sync. Since the bits at the beginning and at the end of the slots do not contain information as in the example of Fig. 3, a slow slot drift will not cause an immediate degradation of the quality of the channel. As a result, the computer can monitor the slow slot drift and has adequate time to select a channel with less interference and makes a seamless handoff.

In some cases, bit errors may occur rapidly and therefore force the computer to make a quick handoff. One such instance occurs when a second mobile station is using the same channel as the channel being used by another mobile station in an adjacent base station. When the two mobile stations using the same channel move close to each other, the quality of the channel may quickly deteriorate. Since the field strength measurement of its own channel has not decreased, the mobile station determines that the present base station must still be the strongest base station. As a result, the computer does not begin a scan for a stronger base station, but rather immediately initiates a handoff to a new channel in the present base station.

Bit errors may also occur because of a sudden slot theft. A sudden slot theft may occur when another mobile station of the same or in an adjacent system has the same channel for a call set up or for a handoff. For example, mobile station 1 may be operating on channel 1 with base station 1 when the mobile station 2 requests the same channel 1 with base station 2. Since mobile station 2 is much closer to the base station 2, the signal strength of the signal from mobile 2 may be much greater than the signal strength of the signal of mobile 1. As a result, mobile 2 may begin operation on channel 1 with base station 2. As a result, mobile station 1 detects errors in every slot. The computer, in mobile station 1, therefore initiates a handoff to a new channel in the same base station.

The computer uses an up/down counter to keep track of bit errors and to make handoff decisions. The up/down counter is incremented by a predetermined amount when the bit errors occur and are registered in the mobile station in step 112. For example, if an error occurs in the slot, the up/down counter may be incremented by four counts. If during successive frames, an error does not occur, the up/down counter is decremented, e.g., by one count, for each frame an error does not occur. This continues until the counter reaches zero. However, if the counter reaches a maximum predetermined value in step 114, for example 16, the computer then determines if the time out limit has been exceeded. If the time out limit has been exceeded, the mobile station goes to the idle locked state in step 118. However, if the time out limit has not been exceeded, the computer then searches for a new channel in the same base station to hand the call off to in step 120. If the handoff is not successful in step 122, the computer can handoff the call to a new channel in a new base station in step 124.

In the present invention, the mobile station is maintained in an idle locked state when the mobile station is not in use. In the idle locked state, the mobile station is locked to or rather the mobile station only checks for paging signals from the base station which has the strongest signal strength. The mobile station checks for paging signal in the S/ID normally available in all active slots. (See Figure 3). If a mobile station in the idle locked state checks for a paging signal occasionally ratherthan constantly, power can be saved. For example, if a mobile station in an idle locked state checks for a paging signal only every eighth frame, then a mobile station in the idle locked mode only needs to listen for the paging information during the beginning of one slot every eight frames. This results in a good power saving ratio. In order to maintain this power saving ratio, scanning for least interfered channels or for a stronger base station should not be performed very often. For example, in the idle locked state, a scan for least interfered channels or for a stronger base station should be made only once every minute. As a result, when a mobile station is moved, the information on the base station with the strongest signal strength may become invalid. Therefore, in the present invention, if errors occur in the received slot or t he field strength of the channel is, e.g., 8 db's weaker than the last update, for a predetermined number of slots, the mobile station immediately updates its memory for the base station with the strongest signal strength and several least interfered channels.

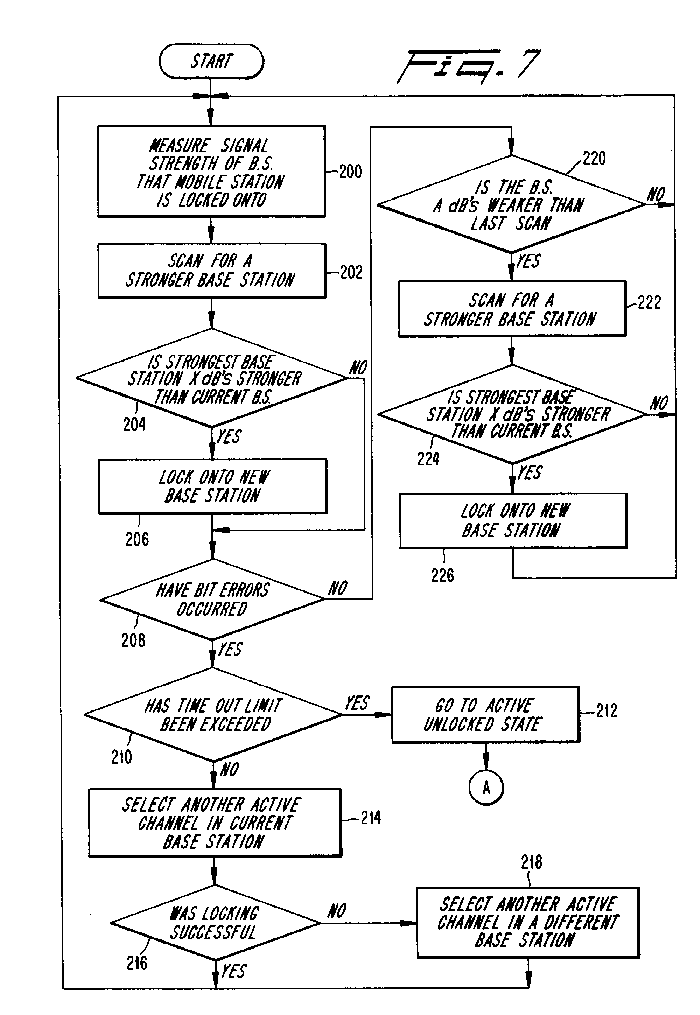

The idle locked state is illustrated in Figure 7. The computer first measures the signal strength of the base station that the mobile station is locked onto for receiving a paging signal in step 200. The computer then scans for a stronger base station in step 202. In step 204, the computer compares the signal strength of the currently used base station with the signal strength of the strongest base station. If the signal strength of the strongest base station is greater than the signal strength of the current base station by a predetermined amount, for example 10 decibels, the computer locks onto an active channel (with paging information) with the strongest base station. However, if the signal strength of the strongest base station is not greater than the signal strength of the current base station by a predetermined amount, the computer skips step 206 and determines whether bit errors are occurring. If bit errors have occurred, the computer determines in step 210 if the mobile station has exceeded its time out limit. In this embodiment, the time out limit is set to 10 seconds, but the present invention is not limited thereto. If the mobile station has exceeded its time out limit, the computer switches the mobile station to the active unlocked state. In the active unlocked state, the mobile station looks for a base station to lock onto. Once the mobile station has found a base station, the mobile station must determine if it has access rights to the base station. If the mobile station can access the base station, the mobile station locks onto the base station. However, if the mobile station can not access a base station, the mobile station returns to the idle locked state. If the mobile station has not exceeded its time out limit, the computer selects a new active channel with the current base station in step 214. If the locking is unsuccessful, the computer selects to lock to a new active channel from a different base station in step 218.

If bit errors have not occurred in step 208, the computer compares the signal strength of the current base station with the signal strength of the current base station from the last scan. If the signal strength of the base station is weaker by a predetermined amount, for example 8 decibels, the computer scans for a stronger base station in step 222. If a base station is found which has a stronger signal strength than the present base station, then the computer locks onto the new base station in step 226.

The present invention, as described above, allows each mobile station to determine in the communication state when a handoff should be made and to which channel and base station the calls should be transferred to. In the idle locked state, each mobile station determines when locking to another active channel on the same or another base station should be made. While the invention has been described in its preferred embodiments, it is to be understood that the words that have been used are words of description rather than limitation and that changes within the purview of the appended claims may be made without departing from the true scope and spirit of the invention in its broader aspects.

## Claims

1. In a cellular mobile radio system having a plurality of base stations, a plurality of mobile stations and a plurality of other cellular systems which use the same channels and a similar channel selection technique, a method for allowing each of said mobile stations to select one of a plurality of traffic channels comprising the steps of:
determining the signal strength of a signal between said mobile station and a first base station which is in communication with said mobile station;
measuring the signal strength of a signal between said mobile station and other base stations;
storing the identity of a base station with the strongest signal strength and storing an ordered list of a number of least interfered channels;
updating the identity of said strongest base station and said list of a number of least interfered channels;
comparing the signal strength of said first base station with the signal strength of said strongest base station; and
selecting one of said least interfered channels and initiating a handoff to said strongest base station when said strongest base station is stronger than the first base station by a predetermined amount.

2. A method for allowing each mobile station to select one of a plurality of traffic channels in a cellular radio system according to claim 1, wherein said predetermined amount is in the range of 6-10 decibels.

3. A method for allowing each mobile station to select one of a plurality of traffic channels in a cellular radio system according to claim 1, wherein said list of least interfered channels is ordered according to the amount of interference on each channel.

4. A method for allowing each mobile station to select one of a plurality of traffic channels in a cellular radio system according to claim 1, wherein said channel with lowest signal strength is first selected at handoff.

5. A met hod for allowing mobile station to select one of a plurality of traffic channels in a cellular radio system according to claim 1, further comprising the steps of:
checking the signal strength of its own received communication signal every frame;
determining whether the field strength has decreased by a predetermined amount for a predetermined number of consecutive frames; and
updating the identity of said strongest base station and said list of least interfered channels when said field strength has decreased by said predetermined amount for said predetermined number of frames.

6. A method for allowing each mobile station to select one of a plurality of traffic channels in a cellular radio system according to claim 7, further comprising the step of changing antenna diversity at said first base station when it is determined that the signal strength of said first base station has decreased by said predetermined amount.

7. A method for allowing each mobile station to select one of a plurality of traffic channels in a cellular radio system according to claim 7, further comprising the step of changing antenna diversity at said mobile station when it is determined that the signal strength of said first base station is decreased by said predetermined amount.

8. A method for allowing each mobile station to select one of a plurality of traffic channels in a cellular radio system according to claim 7, further comprising the step of interrupting communication with said first base station during a time slot so that said mobile station can scan for a stronger base station during said time slot.

9. In a cellular mobile radio system having a plurality of base stations, a plurality of mobile stations and a plurality of other cellular systems which use the same channels and a similar channel selection technique, a method for allowing each of said mobile stations to select one of a plurality of traffic channels comprising the steps of:
determining the signal strength of a signal between said mobile station and a first base station which is in communication with said mobile station;
measuring the signal strength of signals between said mobile station and other base stations;
storing the identity of a base station with the strongest signal strength and storing an ordered list of a number of least interfered channels;
updating the identity of said strongest base station and said list of a number of least interfered channels;
detecting a number of transmission errors in said signal between said mobile station and said first base station; and
initiating handoff when said number of transmission errors has reached a threshold value.

10. A method for allowing each mobile station to select one of a plurality of traffic channels in a cellular radio system according to claim 9, wherein said handoff is made to an active channel on said first base station when the field strength of said signal between said mobile station and said first base station has not decreased by a predetermined amount.

11. A method for allowing each mobile station to select one of a plurality of traffic channels in a cellular radio system according to claim 10, wherein said predetermined amount is in the range of 6-10 decibels.

12. A method for allowing each mobile station to select one of a plurality of traffic channels in a cellular mobile radio system according to claim 9, further comprising the step of scanning for a stronger base station when the field strength has decreased by a predetermined amount and performing handoff when a stronger base station is found.

13. A method for allowing each mobile station to select one of a plurality of traffic channels in a cellular mobile radio system according to claim 12, wherein a handoff is made to an active channel of a first base station when a stronger base station is not located.

14. A method for allowing each mobile station to select one of a plurality of traffic channels in a cellular mobile radio system according to claim 9, further comprising the step of incrementing a counter when said transmission errors are detected, wherein said counter is incremented by a first predetermined amount for each time slot containing transmission errors and is decremented by a second predetermined amount for each time slot which does not contain transmission errors.

15. A method for allowing each mobile station to select one of a plurality of traffic channels in a cellular mobile radio system according to claim 14, wherein said first predetermined number is 3 bits and said second predetermined number is one bit.

16. A method for allowing each mobile station to select one of a plurality of traffic channels in a cellular mobile radio system according to claim 14, further comprising the step of resetting said counter to zero after a handoff.

17. A method for allowing each mobile station to select one of a plurality of traffic channels in a cellular mobile radio system according to claim 9, wherein said detecting step occurs at the beginning of each time slot.

18. A method for allowing each mobile station to select one of a plurality of traffic channels in a cellular mobile radio system according to claim 9, wherein said detecting step occurs at the end of each time slot.

19. A method for allowing each mobile station to select one of a plurality of traffic channels in a cellular mobile radio system according to claim 9, wherein antenna diversity at said first base station is changed when transmission errors are detected.

20. A method for allowing each mobile station to select one of a plurality of traffic channels in a cellular mobile radio system according to claim 9, wherein antenna diversity at said mobile station is changed when transmission errors are detected.

21. In a cellular mobile radio system having a plurality of base stations, a plurality of mobile stations and a plurality of other systems which use the same channels and a similar channel selection technique, a method for allowing each of said mobile stations to select one of a plurality of traffic channels comprising the steps of:
determining the signal strength of a signal between said mobile station in an idle locked state and a first base station to which said mobile station is locked onto;
measuring the signal strength of a signal between said mobile station and active traffic channels of other base station at regular intervals;
storing the identity of a base station with the strongest signal strength;
monitoring the signal strength of said signal between said mobile station and said first base station to determine if the signal strength has decreased by a predetermined amount; and
updating the identity of the base station with strongest signal strength when said signal strength of said first base station has decreased by said predetermined amount.

22. A method for allowing each mobile station to select one of a plurality of traffic channels in a cellular mobile radio system according to claim 21, further comprising the step of immediately updating in the mobile station the identity of the base station of the same system with strongest signal strength when transmission errors are detected for a predetermined number of slots and further comprising the step of unlocking said mobile station and locking it to another active channel on the strongest base station.

23. A method for allowing each mobile station to select one of a plurality of active traffic channels in a cellular mobile radio system according to claim 21, further comprising the step of unlocking said mobile station from said idle locked state and selecting and locking onto another active channel on a new strongest base station of the same system when said signal strength has decreased by said predetermined amount.

24. An apparatus according to claim 21, wherein said storing means also stores an ordered list of least interfered traffic channels.

25. An apparatus according to claim 24, wherein said list of least interfered traffic channels is updated when said signal strength of said first base station has decreased by said predetermined amount.

26. An apparatus according to claim 24, wherein said list of least interfered traffic channels is updated when transmission errors are detected for a predetermined number of slots.

27. An apparatus for selecting traffic channels in a cellular mobile radio system having a plurality of base station, a plurality of mobile stations and a plurality of other cellular system which use the same channels and a similar channel selection technique, wherein each mobile station contains:
means for measuring the signal strength to the signal between said mobile station and a first base station which is in communication with said mobile station and a signal between said mobile station and other base stations;
means for storing the identity of a base station with strongest signal strength and an ordered list of a number of least interfered channels;
means for updating the identity of said strongest base station and said list of a number of least interfered channels;
means for comparing the signal strength of said first base station with the signal strength of said strongest base station; and
means for selecting one of said least interfered channels and initiating a handoff to said strongest base station when said strongest base station is stronger than the first base station by a predetermined amount.

28. An apparatus according to claim 27, wherein each of said mobile stations contain:
means for checking the signal strength of its own received communication signal every frame;
means for determining whether the field strength has decreased by a predetermined amount for a predetermined number of consecutive frames; and
said updating means updates the identity of said strongest base station and said list of least interfered channels when said field strength has decreased by said predetermined amount for said predetermined number of frames.

29. An apparatus for selecting traffic channels in a cellular mobile radio system having a plurality of base stations, a plurality of mobile stations and a plurality of other cellular systems which use the same channels and a similar channel selection technique, wherein each mobile station contains:
means for determining the signal strength of a signal between said mobile station and a first base station which is in communication with said mobile station and the signal strength of signals between said mobile station and other base stations;
means for storing the identity of a base station with strongest signal strength and storing an ordered list of a number of least interfered channels;
means for updating the identity of said strongest base station in said list of a number of least interfered channels;
means for detecting a number of transmission errors in said signal between said mobile station and said first base station; and
means for initiating handoff when said number of transmission errors has reached a threshold value.

30. An apparatus according to claim 29, further including a counting means wherein said counting means is incremented by a first predetermined amount for each time slot containing transmission errors and is decremented by a second predetermined amount for each time slot which does not contain transmission errors.

31. An apparatus for selecting traffic channels in a cellular mobile radio system having a plurality of base stations, a plurality of mobile stations and a plurality of other cellular systems which use the same channels and a similar channel selection technique, wherein each mobile station contains:
means for determining the signal strength of a signal between said mobile station in an idle locked state and a first base station to which said mobile station is locked onto and the signal strength of a signal between said mobile station and active traffic channels of other base stations at regular intervals;
means for storing the identity of a base station with strongest signal strength;
means for monitoring the signal strength of said signal between said mobile station and said base station to determine if the signal strength is decreased by a predetermined amount; and
means for updating the identity of the base station with the strongest signal strength when said signal strength has decreased by a predetermined amount;
means for locking to another active channel on the strongest base station in the same system when bit errors occur.

32. An apparatus according to claim 31, wherein said locking means locks to another active channel on the strongest base station in the same system when another base station becomes stronger than the first base station.

33. An apparatus according to claim 31, wherein said storing means also stores an ordered list of least interfered traffic channels.

34. An apparatus according to claim 31, wherein said locking means locks to another active channel on the strongest base station in the same system when transmission errors are detected for a predetermined number of slots.
